# EUROPEAN PATENT APPLICATION

(11) **EP 2 554 821 A1**
(43) Date of publication of application: **06.02.2013**
(21) Application number: 11765876.5
(22) Date of filing: 04.04.2011
(51) Int. Cl.: F02B 43/10, F01K 25/00, F02C 3/22, F02M 21/02

(54) **HEAT ENGINE AND POWER GENERATION SYSTEM USING THE HEAT ENGINE**

(30) Priority: 22.12.2010 JP 2010285400; 02.04.2010 JP 2010086090
(71) Applicant: Masa International Corp., Kyoto 601-8205 (JP)
(72) Inventor: OZAKI, Yoriyasu, Kizugawa-shi Kyoto 619-0213 (JP); UCHIYAMA, Masakatsu, Kyoto-shi Kyoto 615-8084 (JP)
(74) Representative: Pfenning, Meinig & Partner GbR
(86) International application number: PCT/JP2011/058518
(87) International publication number: WO 2011/125976

(57) **Abstract**

The present invention has a problem aiming to provide a heat engine that emits neither carbon dioxide nor nitrogen oxide and is capable of achieving a simplified structure, and another problem aiming to provide a power generation system using the heat engine.

To solve the problems, a heat engine according to the present invention is an internal combustion engine 1a (1b) including a fuel inlet for introducing oxyhydrogen gas (or a mixture with an existing fuel) into a combustion chamber, a spark plug for igniting the oxyhydrogen gas (the mixture) in the combustion chamber at a predetermined time, a piston that moves in accordance with a pressure change in the combustion chamber before and after ignition, and a motion conversion mechanism to change the motion of the piston to rotational motion of an output shaft 7.

## Description

### TECHNICAL FIELD

The present invention relates to a heat engine including an internal or external combustion engine and a power generation system using the heat engine.

### BACKGROUND ART

Generally, in an internal combustion engine, such as a two-stroke or four-stroke engine, a mixture of fossil-derived fuel, such as gasoline, heavy oil, light oil, or propane gas, and air is combusted in a combustion chamber, causing a pressure change in the combustion chamber to generate energy. Specifically, conventional internal combustion engines use both the fossil-derived fuel and air to generate energy, and therefore cannot dispense with a mechanism to regulate the mixing ratio of fossil-derived fuel and air to be included in a mixture and the amount of mixture to be fed into the combustion chamber. Examples of such a mechanism include a carburetor and a fuel injector.

Furthermore, in an external combustion engine such as a gas turbine, a mixture of air compressed by a compressor and a fossil-derived fuel is combusted in a combustion chamber, energy of the resultant hot gas being swiftly ejected from the combustion chamber is used to rotate the turbine, and energy is extracted from the rotating shaft of the turbine. That is, as with conventional internal combustion engines, conventional external combustion engines use both the fossil-derived fuel and air to generate energy.

In the internal and external combustion engines (collectively referred to below as "heat engines"), more than a small amount of carbon dioxide (CO₂) is produced when a mixture is combusted. For example, where the fossil-derived fuel is gasoline or propane gas, 16 molecules or 3 molecules, respectively, of carbon dioxide, i.e., 16CO₂ or 3CO₂, are produced, as shown in the following reaction formulae:
- 2C₈H₁₈ + 25O₂ → 18H₂O + 16CO₂
- C₃H₈ + 5O₂ → 4H₂O + 3CO₂.
Moreover, since 70% or more of air is nitrogen, nitrogen oxide (NOₓ) is produced together with such carbon dioxide when the mixture is combusted.

Carbon dioxide emissions from heat engines are one of the factors of global warming, and have a seriously adverse effect on global environment. In addition, nitrogen oxide exceeding a standard level causes photochemical smog and acid rain, and also adversely affects the human respiratory system. Accordingly, particularly in recent years, research and development has been actively conducted to reduce emissions of these substances.

Note that the aforementioned conventional art is based on information about general technology obtained by the present applicant, and as of filing of the present application, the applicant has no information about prior art documents that disclose the aforementioned conventional art and other prior art.

### DISCLOSURE OF THE INVENTION

### PROBLEMS TO BE SOLVED BY THE INVENTION

Technologies obtained by research and development as mentioned above can reduce the amount of carbon dioxide and nitrogen oxide to be produced, to a certain degree. However, so long as the fossil-derived fuel is used as a fuel, it is not possible to eliminate production of carbon dioxide and nitrogen oxide.

Furthermore, by using hydrogen as a fuel in place of the fossil-derived fuel, it is rendered possible to eliminate production of carbon dioxide and nitrogen oxide. However, heat engines of such a type, as with conventional heat engines, require complex mechanisms to strictly regulate the mixing ratio of hydrogen and air and introduce air into the combustion chambers.

The present invention has been achieved under the above circumstances, with a problem thereof being to provide a heat engine that emits neither carbon dioxide nor nitrogen oxide and is capable of dispensing with a mechanism to introduce air into a combustion chamber and a mechanism to regulate the mixing ratio of fuel and air, thereby achieving a simplified structure, and another problem being to provide a power generation system using the heat engine.

### SOLUTION TO THE PROBLEMS

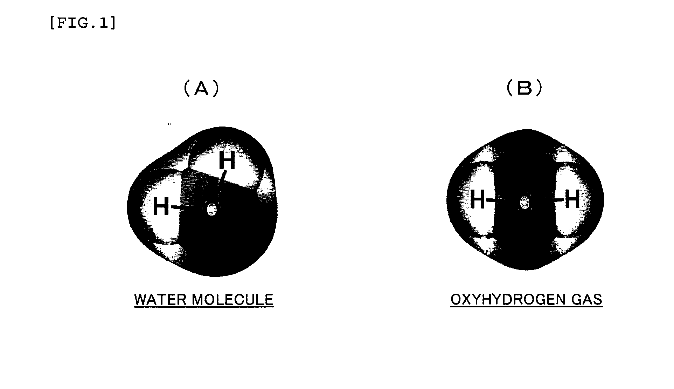

The present inventors diligently conducted studies to solve the aforementioned problems, and arrived at the present invention based on findings that the problems can be solved by using as a fuel "oxyhydrogen gas" containing hydrogen and oxygen at a ratio of 2 : 1 (an example thereof is hydrogen-oxygen gas disclosed in Japanese Patent No. 3975467, in which an oxygen atom and two hydrogen atoms are considered to be bound at 180 degrees (see FIG. 1(B)), rather than at about 105 degrees as in a water molecule (see FIG. 1(A))).

Specifically, a heat engine according to a first aspect of the present invention is an internal combustion engine including a fuel inlet for introducing oxyhydrogen gas into a combustion chamber as a fuel, a spark plug for igniting the fuel in the combustion chamber, a piston that moves in accordance with a pressure change in the combustion chamber before and after ignition, and a motion conversion mechanism to change the motion of the piston to rotational motion of an output shaft.

Oxyhydrogen gas originally contains oxygen, and therefore does not need to be mixed with air upon combustion. Moreover, since oxyhydrogen gas is composed of hydrogen and oxygen, water or water vapor is produced by combustion. Thus, with this configuration, it is possible to eliminate carbon dioxide and nitrogen oxide emissions, and omit a mechanism to regulate the mixing ratio of air and fuel and a mechanism to introduce air into the combustion chamber, thereby achieving a simplified structure. In addition, since this heat engine does not require air, energy can be extracted from the output shaft even in a vacuum or in water.

In the heat engine according to the first aspect, the fuel can be a mixture of oxyhydrogen gas and an existing fuel.
The wording "existing fuel" herein refers to a fuel as generally used in conventional heat engines. Examples of the "existing fuel" include hydrogen and so on, in addition to fossil-derived fuels, such as gasoline, heavy oil, light oil, propane gas, natural gas, paraffin (kerosene), jet fuel, and rocket fuel. In the case where a mixture obtained by mixing oxyhydrogen gas with a fossil-derived fuel is used, carbon dioxide and nitrogen oxide are produced depending on the proportion of the mixed fossil-derived fuel, but by using the fossil-derived fuel, which is relatively easy to obtain, in combination, it is rendered possible to decrease the amount of oxyhydrogen gas to be used, and increase the combustion efficiency of the oxyhydrogen gas. Moreover, even when the proportion of the mixed fossil-derived fuel is high, it is still possible to increase the combustion efficiency of the fossil-derived fuel, thereby improving fuel efficiency and cutting carbon dioxide and nitrogen oxide emissions. Even when a mixture with hydrogen is used as a fuel, it is possible to decrease the amount of oxyhydrogen gas to be used, and increase the combustion efficiency of the oxyhydrogen gas. Thus, with this configuration, it is possible to stably run the heat engine. It is conceived that this advantage is particularly beneficial in a transitional stage to diffusion before an infrastructure for stably supplying oxyhydrogen gas is established.

The heat engine according to the first aspect may further include a water injection port for injecting a nano-sized water mist into the combustion chamber.
With this configuration, the water mist is combusted together with oxyhydrogen gas, and the volume of water is increased to about 1700-fold by vapor explosion, so that a pressure change in the combustion chamber before and after ignition increases, making it possible to extract greater energy, and also possible to decrease the amount of oxyhydrogen gas to be used, as in the case where the fossil-derived fuel is used in combination.

For example, the fuel inlet in the first aspect can be of a type that directly inj ects the fuel into the combustion chamber by a direct injection method, or can be a valve serving both as a check valve and a safety valve.

The heat engine according to the first aspect is desirably configured such that the fuel inlet does not introduce the fuel into the combustion chamber, or the spark plug does not ignite the fuel, for a given period after start-up.
With this configuration, it is possible to prevent implosion from being caused immediately after start-up due to combustion of a mixture of air accumulating in the combustion chamber and freshly introduced oxyhydrogen gas.

Furthermore, a heat engine according to a second aspect of the present invention is an external combustion engine including a fuel inlet for introducing oxyhydrogen gas as a fuel, a compressor for rotating about an output shaft to compress and feed the introduced fuel to a combustion chamber, a spark plug for producing hot gas by igniting the compressed fuel in the combustion chamber, and a turbine that is caused to rotate about the output shaft by the hot gas.ejected from the combustion chamber.

With this configuration, it is possible to eliminate carbon dioxide and nitrogen oxide emissions, as in the case of the heat engine (internal combustion engine) according to the first aspect. Moreover, since this heat engine does not require air, energy can be extracted from the output shaft even in a vacuum or in water.

The heat engine according to the second aspect may further include a fuel injection port for injecting an existing fuel into the combustion chamber, and a water injection port for injecting a nano-sized water mist into the combustion chamber.
With this configuration, it is possible to increase the combustion efficiency of the oxyhydrogen gas while decreasing the amount of the oxyhydrogen gas to be used, and also possible to extract greater energy by taking advantage of vapor explosion of thewatermist, as in the case of the heat engine (internal combustion engine) according to the first aspect.

Furthermore, a power generation system according to a third aspect of the present invention includes a heat engine according to the first or second aspect, and a generator connected to the output shaft of the heat engine.

With this configuration using the heat engine according to the first or second aspect, it is possible to produce clean power while emitting neither carbon dioxide nor nitrogen oxide or cutting such emissions.

Preferably, the power generation system according to the third aspect further includes a power conversion device for converting first power produced by the generator into desired second power, and control means for detecting either or both of an output voltage and an output current of the generator or the power conversion device, and changing the amount of fuel to be introduced and the timing of ignition, on the basis of a result of the detection.

### EFFECT OF THE INVENTION

The present invention makes it possible to provide a heat engine that emits neither carbon dioxide nor nitrogen oxide and has a simplified structure compared to conventional heat engines and also to provide a power generation system using the heat engine.

### BRIEF DESCRIPTION OF THE DRAWINGS

FIG. 1 provides schematic diagrams (A) and (B) respectively illustrating the structure of a water molecule and the structure of oxyhydrogen gas.
FIG. 2 provides cross-sectional views (A) and (B) of two-stroke and four-stroke engines, respectively, as examples of an internal combustion engine according to the present invention.
FIG. 3 is a block diagram illustrating embodiments of the internal combustion engine in FIG. 2 and its associated equipment.
FIG. 4 is a schematic view of a gas turbine as an example of an external combustion engine according to the present invention.
FIG. 5 is a block diagram illustrating embodiments of a power generation system according to the present invention, including an internal combustion engine, and its associated equipment.
FIG. 6 is a block diagram illustrating embodiments of a power generation system according to the present invention, including an external combustion engine, and its associated equipment.

### MODE FOR CARRYING OUT THE INVENTION

Hereinafter, preferred embodiments of a heat engine and a power generation system according to the present invention will be described with reference to the accompanying drawings. Note that in the following descriptions, two-stroke and four-stroke engines will be taken as examples of an internal combustion engine, but the internal combustion engine may be of another type such as a rotary engine using rotary pistons called rotors, in place of a crank mechanism. Moreover, in the following descriptions, a gas turbine will be taken as an example of an external combustion engine, but the external combustion engine is not limited to this.

### [Configuration of Internal Combustion Engine]

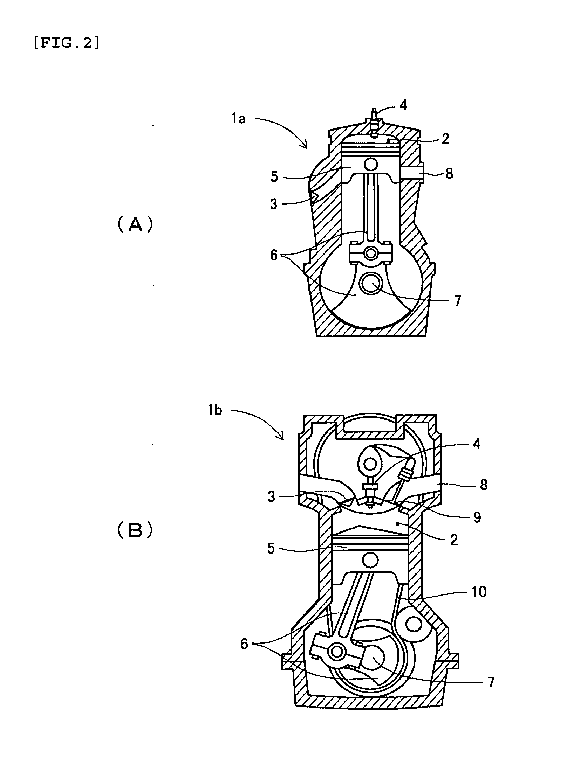

FIG. 2 (A) depicts a two-stroke engine as an embodiment of the internal combustion engine according to the present invention. As shown in the figure, the internal combustion engine 1a includes a fuel inlet 3 for introducing oxyhydrogen gas into a combustion chamber 2 as a fuel, a spark plug 4 for igniting oxyhydrogen gas in the combustion chamber 2 at a predetermined time, a piston 5 that vertically reciprocates in accordance with a pressure change in the combustion chamber 2 before and after ignition, and a motion conversion mechanism 6 including a crank shaft, etc., for converting the reciprocal motion of the piston 5 into rotational motion of an output shaft 7.

For example, the fuel inlet 3 can be of a direct injection type, which injects oxyhydrogen gas directly into the combustion chamber 2. Moreover, in the case where a conventional gasoline engine or gas engine is used as the internal combustion engine according to the present invention, an intake manifold (air inlet) may be used as the fuel inlet 3, so that, when the pressure in the combustion chamber 2 becomes negative, a necessary amount of oxyhydrogen gas is automatically introduced into the combustion chamber 2.

In the internal combustion engine 1a, oxyhydrogen gas is introduced from the fuel inlet 3 into the combustion chamber 2 with the piston 5 at the bottom, and the oxyhydrogen gas is compressed as the piston 5 ascends. Thereafter, the spark plug 4 ignites the compressed oxyhydrogen gas, which expands (increases pressure), thereby pressing the piston 5 down. Then, this motion of the piston 5 is transmitted to the output shaft 7 via the motion conversion mechanism 6, rotating the output shaft 7. Note that the expanded oxyhydrogen gas turns into water vapor or water and is ejected from an outlet 8.

FIG. 2 (B) depicts a four-stroke engine as an embodiment of the internal combustion engine according to the present invention. As with the internal combustion engine 1a, the internal combustion engine 1b includes a fuel inlet 3 for introducing oxyhydrogen gas into a combustion chamber 2 as a fuel, a spark plug 4, a piston 5, a motion conversion mechanism 6, an output shaft 7, and an outlet 8. In addition, the internal combustion engine 1b includes an exhaust valve 9 for regulating the amount of gas to be ej ected from the combustion chamber 2 via the outlet 8, and a timing belt 10 for coordinate movement of the piston 5 with open/close action of the exhaust valve 9. For example, the fuel inlet 3 can be of a direct injection type, which injects oxyhydrogen gas directly into the combustion chamber 2. Moreover, an unillustrated fuel intake valve (corresponding to the exhaust valve 9 in FIG. 2(B)) that opens/closes in accordance with movement of the piston 5 may be provided between the fuel inlet 3 and the combustion chamber 2 for the purpose of regulating the amount of oxyhydrogen gas to be introduced into the combustion chamber 2 through the fuel inlet 3.

In the internal combustion engine 1b, once the piston 5 descends to the bottom, oxyhydrogen gas is introduced into the combustion chamber 2 through injection from the fuel inlet 3, and the oxyhydrogen gas in the combustion chamber 2 is compressed as the piston 5 ascends. The spark plug 4 ignites the compressed oxyhydrogen gas, which expands (increases pressure), thereby pressing the piston 5 down. Thereafter, once the piston 5 ascends to the top, the exhaust valve 9 opens to eject oxyhydrogen gas in the combustion chamber 2 as water vapor or water. The movement of the piston 5 is transmitted to the output shaft 7 via the motion conversion mechanism 6, rotating the output shaft 7.

Note that the internal combustion engines 1a and 1b shown in FIGS. 2(A) and 2(B) do not always have their pistons 5 stop at top dead center upon cessation of operation, so that air might remain in a space created in an upper cylinder portion (combustion chamber 2). As a result, upon start-up, a mixture of freshly introduced oxyhydrogen gas and the remaining air is compressed and ignited, which might cause implosion. When implosion occurs, a blast sound occurs inside the engine, which is annoying to hear. To prevent such implosion, it is necessary to (1) stop introducing oxyhydrogen gas until the air remaining in the combustion chamber 2 is ejected or (2) eject a mixture of oxyhydrogen gas and air without ignition.

To take approach (1) above, the fuel inlet 3 is provided in the form of a valve that opens/closes in accordance with the level of pressure for fuel supply. When the pressure for fuel supply exceeds a predetermined level, the valve opens to pass fuel (oxyhydrogen gas) to be introduced into the combustion chamber 2. On the other hand, the valve is designed not to be opened by negative pressure or explosion in the combustion chamber 2, and serves both as a check valve and a safety valve. By using such a valve and setting the pressure for fuel supply to be kept low for a given period after start-up, it is possible to prevent oxyhydrogen gas from being introduced before the remaining air is ejected and causing implosion. Naturally, the valve can be of a type that opens/closes under computer control.

Furthermore, to take approach (2) above, the spark plug 4 is controlled not to be activated for a given period after start-up.

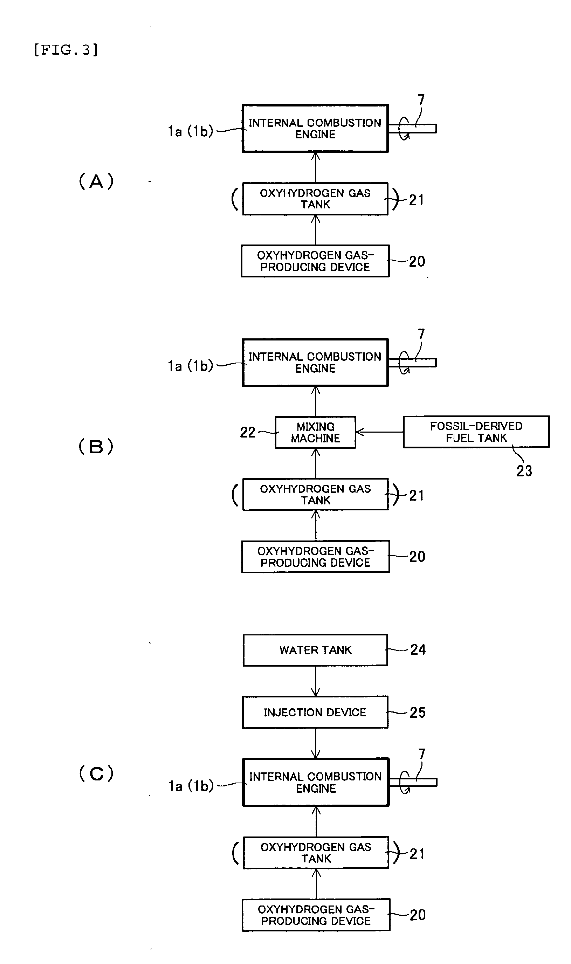

FIG. 3 is a block diagram illustrating the internal combustion engine according to the present invention and its associated equipment. As shown in FIG. 3(A), oxyhydrogen gas produced by an oxyhydrogen gas-producing device 20 is supplied to the internal combustion engine 1a (1b), but an oxyhydrogen gas tank 21 may be provided therebetween to temporarily store oxyhydrogen gas in the oxyhydrogen gas tank 21. To store as much oxyhydrogen gas as possible in the oxyhydrogen gas tank 21 with a limited capacity, the oxyhydrogen gas-producing device 20 is preferably capable of producing oxyhydrogen gas that does not turn back to water even in the case where it is compressed by high pressure. In this regard, attention is required because some oxyhydrogen gases in the early stage of study turn back to water under a pressure of only several atmospheres.

As shown in FIG. 3(B), a mixing machine 22 such as a carburetor may be provided between the oxyhydrogen gas-producing device 20 (or the oxyhydrogen gas tank 21) and the internal combustion engine 1a (1b). As a result, a mixture of oxyhydrogen gas from the oxyhydrogen gas-producing device 20 and a fossil-derived fuel from a fossil-derived fuel tank 23 can be introduced into the internal combustion engine 1a (1b) as a fuel. In this embodiment, carbon dioxide and nitrogen oxide are produced depending on the proportion of the fossil-derived fuel in the mixture, but by using the fossil-derived fuel, which is relatively easy to obtain, in combination, it is rendered possible to decrease the amount of oxyhydrogen gas to be used and increase the combustion efficiency of the oxyhydrogen gas. Moreover, even when the proportion of the fossil-derived fuel in the mixture is high, it is possible to increase the combustion efficiency of the fossil-derived fuel, thereby improving fuel efficiency and cutting carbon dioxide and nitrogen oxide emissions. That is, the embodiment shown in FIG. 3 (B) makes it possible to stably run the internal combustion engine 1a (1b). Note that the fossil-derived fuel is merely an example of the existing fuels. Using hydrogen in place of the fossil-derived fuel also makes it possible to decrease the amount of oxyhydrogen gas to be used and increase the combustion efficiency of the oxyhydrogen gas.

Furthermore, as shown in FIG. 3 (C), a water tank 24 and an inj ection device 25 maybe further provided to inject a nano-sized water mist into the combustion chamber 2. The water mist is injected from a water injection port (not shown) provided in the combustion chamber 2 at the same time as introduction of oxyhydrogen gas. With this configuration, the water mist is combusted together with oxyhydrogen gas, and the volume of water is increased to about 1700-fold by vapor explosion, so that a pressure change in the combustion chamber 2 before and after ignition increases, making it possible to extract greater energy, and also possible to decrease the amount of oxyhydrogen gas to be used, as in the case where fossil-derived fuel is used in combination.

### [Configuration of External Combustion Engine]

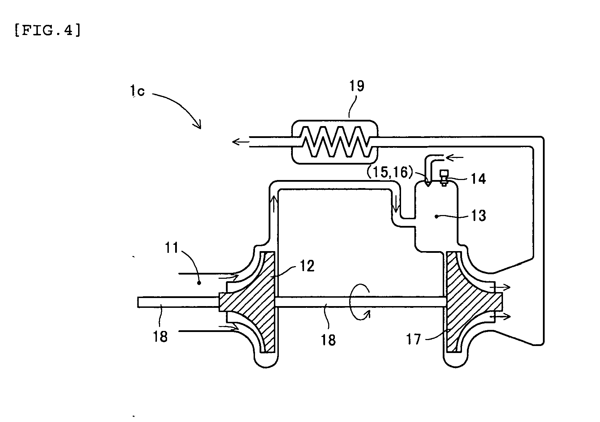

FIG. 4 depicts a gas turbine as an embodiment of the external combustion engine according to the present invention. As shown in the figure, the external combustion engine 1c includes a fuel inlet 11 for introducing oxyhydrogen gas as a fuel, a compressor 12 for rotating at high speed about an output shaft 18 to compress and feed the introduced oxyhydrogen gas to the combustion chamber 13, a spark plug 14 for producing hot gas by igniting the compressed oxyhydrogen gas in the combustion chamber 13, and a turbine 17 for rotating at high speed about the output shaft 18 by virtue of hot gas ejected from the combustion chamber 13 vigorously hitting blades. Moreover, the external combustion engine 1c also includes a regenerator 19 for increasing efficiency.

In the external combustion engine 1c, compressed oxyhydrogen gas turns into hot water vapor gas in the combustion chamber 13, and energy of the hot gas rotates the turbine 17 at high speed. As a result, the compressor 12 coaxially connected to the turbine 17 via the output shaft 18 rotates at high speed, thereby continuously feeding the compressed oxyhydrogen gas to the combustion chamber 13. In addition, the introduced oxyhydrogen gas is finally ejected as water vapor or water.

As shown in the figure, the external combustion engine 1c may further include a fuel injection port 15 or a water injection port 16. An existing fuel injected from the fuel injection port 15 or a nano-sized water mist injected from the water injection port 16 is combusted together with compressed oxyhydrogen gas, thereby achieving an effect similar to that achieved by the internal combustion engine 1a or 1b.

Note that the oxyhydrogen gas can be supplied from, for example, the oxyhydrogen gas-producing device 20 or the oxyhydrogen gas tank 21 shown in FIG. 3, and the water mist can be injected into the combustion chamber 13 by using, for example, the water tank 24 and the injection device 25 shown in FIG. 3 (C). Moreover, the existing fuel can be injected into the combustion chamber 13 by various methods used with conventional gas turbines.

### [Configuration of Power Generation System]

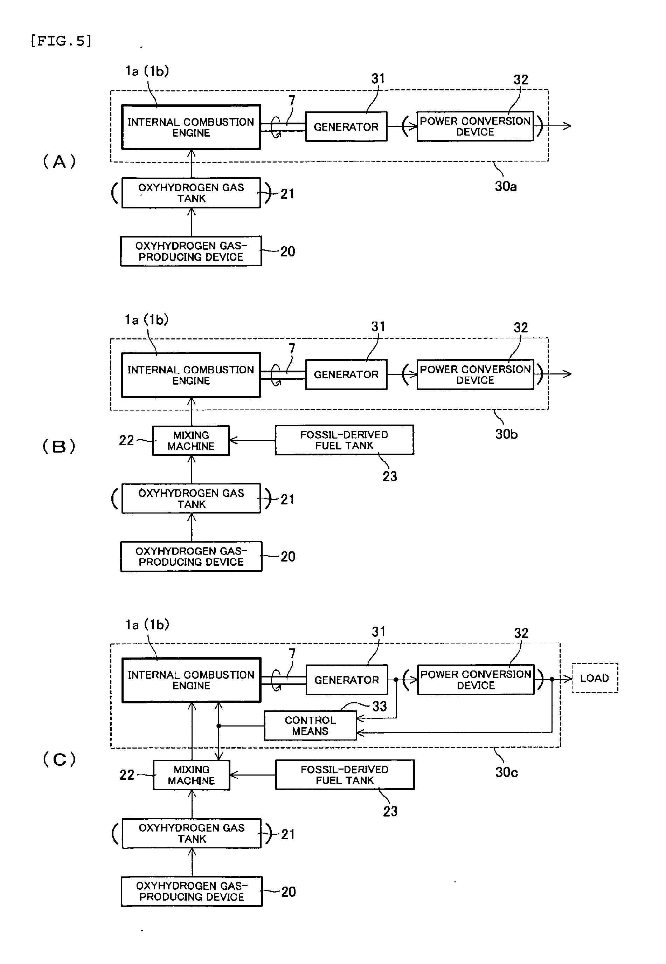

FIG. 5 (A) is a block diagram of a power generation system using an internal combustion engine according to the present invention and its associated equipment. The power generation system 30a at least includes an internal combustion engine 1a (1b) and a generator 31 connected to an output shaft 7a of the internal combustion engine 1a (1b). In the power generation system 30a, when the output shaft 7 of the internal combustion engine 1a (1b) rotates upon supply of oxyhydrogen gas, the generator 31 produces power correspondingly.

As shown in the figure, a power conversion device 32 may be provided on the output side of the generator 31, to convert power from the generator 31 into desired power. Examples of the power conversion device 32 to be used include a DC-AC inverter device that converts direct-current power DC12V outputted by the generator 31 into alternating-current power AC100V, and a device that includes inverters for stabilizing power outputted by the generator 31 and regulating the frequency of the power outputted by the generator 31 to the frequency of a commercial power supply.

Furthermore, as in a power generation system 30b shown in FIG. 5 (B), the internal combustion engine 1a (1b) may be supplied with a mixture obtained by the mixing machine 22 mixing oxyhydrogen gas and a fossil-derived fuel (existing fuel). The mixing machine 22 is intended to mix two types of gas at a desired ratio and can be configured by a pressure regulator, a shutoff valve, a zero governor, a-mixer, etc.

Furthermore, as in a power generation system 30c shown in FIG. 5 (C), the power generation system according to the present invention preferably includes control means 33 consisting of a computer and various sensors. The control means 33 detects an output voltage or an output current (the size of electrical load) of the generator 31 or the power conversion device 32, and changes the amount of oxyhydrogen gas or mixture to be introduced into the combustion chamber 2 and the timing of ignition, on the basis of a result of the detection. It is inefficient to always drive the internal combustion engine 1a (1b) at the maximum rotation speed, but the oxyhydrogen gas or mixture can be saved by raising/lowering the rotation speed of the internal combustion engine 1a (1b) under the aforementioned control.

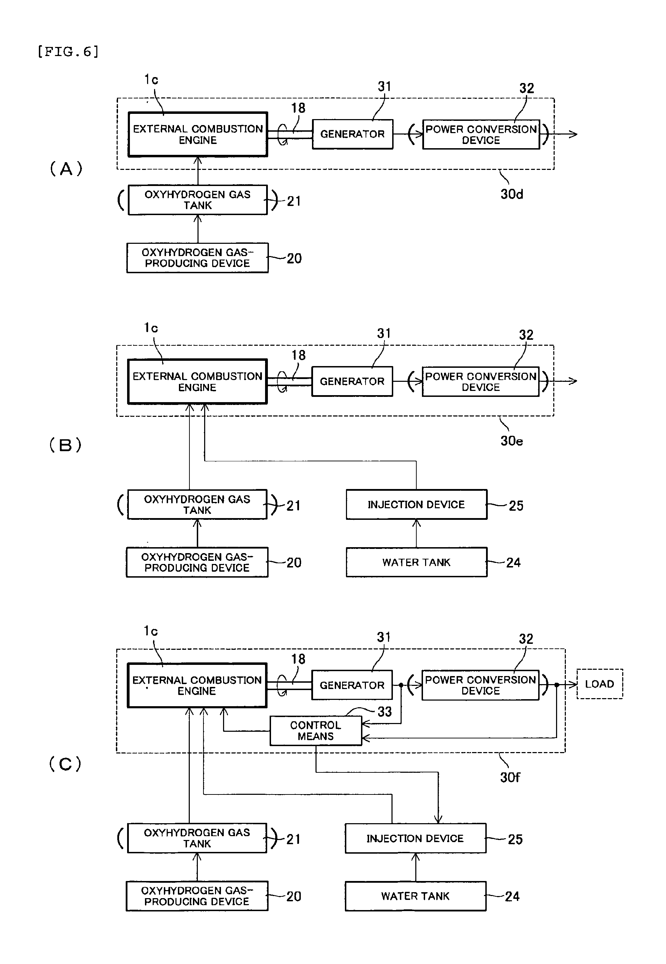

FIG. 6 (A) is a block diagram of a power generation system using an external combustion engine according to the present invention and its associated equipment. The power generation system 30d at least includes an external combustion engine 1c and a generator 31 connected to an output shaft 18 of the external combustion engine 1c. In the power generation system 30d, when the output shaft 18 of the external combustion engine 1c rotates, the generator 31 produces power correspondingly. As shown in the figure, the power generation system 30d may include a power conversion device 32 on the output side of the generator 31.

Other conceivable examples of the power generation system using an external combustion engine according to the present invention include a power generation system 30e using an external combustion engine 1c in which a water mist is injected into a combustion chamber 13 by means of a water tank 24 and an injection device 25, and a power generation system 30f in which the amount of watermist tobe injected and the timingof ignition are controlled by control means 33.

Furthermore, each of the power generation systems 30a to 30f may further include a secondary battery (not shown) provided between the generator 31 and the power conversion device 32 and rechargeable with direct-current voltage outputted by the generator 31. As a result, even in the case where high power is intended to be instantaneously supplied to a load circuit but the power is not generated in time by raising the rotation speed of the internal combustion engine 1a (1b) or the external combustion engine 1c, stable power supply can be ensured.

### [Experimental Results]

Described next are the results of experimentation conducted to generate power by supplying oxyhydrogen gas to a commercially available air-cooled four-stroke OHV engine ("GM82PN" manufactured by Mitsubishi Heavy Industries, Ltd.) with its air supply port closed. Experimental conditions were as follows.

### (1) Ignition Timing

The timing of ignition is represented by an angle of rotation of the crank shaft (motion conversion mechanism 6) with respect to the piston 5 at top dead center. When the timing of ignition is too early, combustion starts and the piston 5 is pressed down before the piston 5 reaches top dead center, i.e., before oxyhydrogen gas is appropriately compressed, resulting in a waste of resources. On the other hand, when the timing of ignition is too late, oxyhydrogen gas is combusted after the piston 5 starts descent, so that a pressure change due to gas expansion cannot be fully exploited. In view of this, the present experimentation had the timing of ignition fixed at 25° before top dead center (BTDC). Note that when compared to fossil-derived fuels such as gasoline, oxyhydrogen gas is combusted at lower speed, and conceivably, it is preferable to set the timing of ignition to an earlier point compared to the case where a fossil-derived fuel is used.

### (2) Compression Pressure

In the experimentation, the level was set not to fall below 5 kgf / cm² in order to ensure normal rotation even at low speed.

### (3) Pressure for Fuel Supply

In the experimentation, the pressure at which to supply oxyhydrogen,gas was set at 0.2 MPa.

### (4) Power Conversion Device

In the experimentation, a self-excitation inverter was used.

When the engine was set to work under the above conditions, an output capacity of 850VA was achieved at the maximum rotation speed 3200 rpm. Moreover, the engine was able to run in a normal manner even at a low speed of about 500 rpm. Note that the above conditions are merely illustrative, and it is understood that optimal values for the timing of ignition, the compression pressure, and the pressure for fuel supply vary in accordance with engine displacement, the number of cylinders, and so on.

### DESCRIPTION OF THE REFERENCE CHARACTERS

1a, 1b internal combustion engine
1c external combustion engine
2 combustion chamber
3 fuel inlet
4 spark plug
5 piston
6 motion conversion mechanism
7 output shaft
8 outlet
9 exhaust valve
10 timing belt
11 fuel inlet
12 compressor
13 combustion chamber
14 spark plug
15 fuel injection port
16 water injection port
17 turbine
18 output shaft
19 regenerator
20 oxyhydrogen gas-producing device
21 oxyhydrogen gas tank
22 mixing machine
23 fossil-derived fuel tank
24 water tank
25 injection device
30a to 30f power generation system
31 generator
32 power conversion device
33 control means

## Claims

1. A heat engine that is an internal combustion engine comprising:
a fuel inlet for introducing oxyhydrogen gas into a combustion chamber as a fuel;
a spark plug for igniting the fuel in the combustion chamber;
a piston that moves in accordance with a pressure change in the combustion chamber before and after ignition; and
a motion conversion mechanism to change the motion of the piston to rotational motion of an output shaft.

2. The heat engine according to claim 1, wherein the fuel is a mixture of the oxyhydrogen gas and the existing fuel.

3. The heat engine according to claim 1, further comprising a water injection port for injecting a nano-sized water mist into the combustion chamber.

4. The heat engine according to any of claims 1 through 3, wherein the fuel inlet directly injects the fuel into the combustion chamber by a direct injection method.

5. The heat engine according to any of claims 1 through 4, wherein the fuel inlet is a valve serving both as a check valve and a safety valve.

6. The heat engine according to any of claims 1 through 5, wherein the fuel inlet does not introduce the fuel into the combustion chamber, or the spark plug does not ignite the fuel, for a given period after start-up.

7. A heat engine that is an external combustion engine comprising:
a fuel inlet for introducing oxyhydrogen gas as a fuel;
a compressor for rotating about an output shaft to compress and feed the introduced fuel to a combustion chamber;
a spark plug for producing hot gas by igniting the compressed fuel in the combustion chamber; and
a turbine that is caused to rotate about the output shaft by the hot gas ejected from the combustion chamber.

8. The heat engine according to claim 7, further comprising a fuel injection port for injecting an existing fuel into the combustion chamber.

9. The heat engine according to claim 7, further comprising a water injection port for injecting a nano-sized water mist into the combustion chamber.

10. A power generation system comprising:
a heat engine of any of claims 1 through 9; and
a generator connected to an output shaft of the heat engine.

11. The power generation system according to claim 10, further comprising:
a power conversion device for converting first power produced by the generator into desired second power; and
control means for detecting either or both of an output voltage and an output current of the generator or the power conversion device, and changing the amount of fuel to be introduced and the timing of ignition, on the basis of a result of the detection.
